# EUROPEAN PATENT APPLICATION

(11) **EP 3 173 156 A1**
(43) Date of publication of application: **31.05.2017**
(21) Application number: 15824910.2
(22) Date of filing: 21.07.2015
(51) Int. Cl.: B05C 9/12, B05D 3/06, G02B 5/23, G02C 7/10, B05C 11/08

(54) **PHOTOPOLYMERIZATION DEVICE AND PRODUCTION METHOD FOR LENS THAT HAS PHOTOCHROMIC COATING LAYER**

(30) Priority: 24.07.2014 JP 2014151266
(71) Applicant: Tokuyama Corporation, Shunan-shi, Yamaguchi-ken 745-8648 (JP)
(72) Inventor: ASAHARA, Yoshihiro, Shunan-shi Yamaguchi 745-8648 (JP); TAMUKAI, Takashi, Shunan-shi Yamaguchi 745-8648 (JP); TAKENAKA, Junji, Shunan-shi Yamaguchi 745-8648 (JP); MOMODA, Junji, Shunan-shi Yamaguchi 745-8648 (JP); MORI, Katsuhiro, Shunan-shi Yamaguchi 745-8648 (JP)
(74) Representative: Schlief, Thomas P.
(86) International application number: PCT/JP2015/070724
(87) International publication number: WO 2016/013547

(57) **Abstract**

To provide a photopolymerization device and to provide a production method for a lens that has a photochromic coating layer, the device and the production method being capable of preventing the occurrence of wide liquid pool and of the wrinkle of an end part, even for a workpiece that has a refractive index that is close to that of the photochromic coating layer. A photopolymerization device (20) that has: a workpiece holding part (1) that holds a workpiece (W); and a photoirradiation device (6) that is arranged above the workpiece holding part (1) and that radiates light toward the workpiece (W). The photopolymerization device (20) is configured such that a reflecting plate (3) that has a reflecting surface that has a specular gloss at angles of 60° of 10-200 is arranged below the workpiece holding part (1) and such that light that arrives at the reflecting surface of the reflecting plate (3) is radiated toward the workpiece (W).

## Description

### TECHNICAL FIELD

The present invention relates to the photopolymerization device and the production method of the lens comprising the photochromic coating layer.

### DESCRIPTION OF THE RELATED ART

The lens comprising the photochromic coating layer has the characteristic wherein the color and concentration changes by the photoirradication, thus it is used as a lens for a high functional glasses or a lens for a sun glasses. For example, by using the lens comprising the photochromic coating layer, a multifunctional glasses can be provided which functions as the sunglasses by coloring at outside where the light including the ultraviolet ray is irradiated such as a sun light or so, and functions as a regular glasses by fading the color at inside where the sun light is not irradiated.

As the method for producing the lens comprising the photochromic coating layer, the method of forming the photochromic coating layer to the lens substrate made of plastic or so by using the photopolymerizable photochromic coating agent is known (hereinafter, it may be referred as the coating method ). In the photopolymerization device for carrying out the coating method, for example the workpiece (the plastic lens) dropped with the coating agent comprising the photochromic property is rotated at predetermined speed to spread the coating agent to entire workpiece, then further the workpiece is rotated at high speed to remove the excessive coating agent thereby regulating to the desired thickness, then the light is irradiated by with a photoirradiation device, thereby the photochromic layer is formed to the surface of the workpiece (see Patent document 1).

According to this method, theoretically, the photochromic coating layer can be formed to the surface of any type of workpieces (the plastic lens) regardless of the refractive index and the material or so.

### PRIOR ART

[Patent Article 1] JP Patent Application Laid Open No.2005-296752

### DISCLOSURE OF INVENTION

### PROBLEM TO BE SOLVED BY THE INVENTION

However, when forming the photochromic coating layer to the surface of various type of the workpiece (the plastic lens) using the conventional photopolymerization device, in some of the workpiece, a winkle form malfunction and a wide liquid pool (the part where the photochromic coating liquid pooled in thick thickness) of the photochromic coating layer are formed on the end surface of the workpiece; and the yield when producing the lens comprising the photochromic coating layer by the coating method is lowered.

The shape of the workpiece when forming the photochromic coating layer is generally a perfect circle, and after the photochromic coating layer is formed, a cutting process is carried out in accordance with the shape of the lens frame. This processing is also called "lens shape processing". The end part of the workpiece is removed by cutting during the lens shape processing. Therefore, even if the winkle is formed to the photochromic coating layer at the end part of the workpiece, the malfunction part is removed at the final lens product. However, there is a constant demand to lower the cost, and also thus to reduce the amount of cut. By reducing the amount being cut, the cost for the source material is reduced, and also the time for cut can be shortened. Therefore, for the lens prior to the lens shape processing, the winkle form malfunction and a wide liquid pool of the photochromic coating layer formed at the end surface of the workpiece needs to be suppressed.

The winkle form malfunction and the wide liquid pool of the photochromic coating layer formed at the end surface of the workpiece are thought to be generated due to the insufficient photopolymerization of the photochromic coating agent at said part. In order to solve such problem, increasing the illumination of the light or to irradiate the light longer has been considered. However, if the irradiation light amount is increased, the polymerization proceeds too much, thus the photochromic property declines (the color optical density is lowered, and the color fading speed is slowed down). Further, the workpiece is thermally deformed due to the heat accumulation, and the power and the optical axis of the lens shifts from the designed value.

The present invention is achieved in view of such circumstance, and the object of the present invention is to provide the photopolymerization device capable of preventing the winkle form malfunction and the wide liquid pool of the photochromic coating layer formed at the end surface of the workpiece; and also to provide the production method of the lens comprising the photochromic coating layer.

### MEANS FOR SOLVING THE PROBLEM

As a result of keen examination to attain said object, it was found that the winkle form malfunction of the photochromic coating layer at the end part of the workpiece tends to appear prominently when the refractive index of the workpiece is 1.51 to 1.59. The refractive index of the photochromic coating layer is usually 1.52 to 1.56 or so, thus if the difference of the refractive index between the photochromic coating layer and the workpiece is small, compared to the case when the difference of the refractive index between the photochromic coating layer and the workpiece is large, the reflection amount of the light at the workpiece surface which passed through the photochromic coating layer during the photopolymerization decreases, and the irradiation amount of the light to the photochromic coating agent of the workpiece end part surface decreases, hence it is thought to cause the above mentioned malfunction.

Also, the photoabsorption characteristic of the workpiece itself is found to affect the winkle form malfunction and the wide liquid pool of the photochromic coating layer at the end part of the workpiece. The photochromic coating agent coated to the surface of the workpiece obviously cures by the reflection light irradiated from the workpiece surface, but the curing also occurs by the reflection light from the backside or the side surface of the workpiece. However, when UV light is used for the photopolymerization in case the absorption edge of the workpiece itself is at a relatively long wavelength side and the ultraviolet ray (UV) of the short wavelength is easily absorbed, then the light amount which reaches to the photochromic coating agent via the workpiece is reduced. Therefore, the winkle form malfunction may be formed to the photochromic coating layer at the end part of the workpiece since the difference in the polymerization speed between the surface layer and the inside of the photochromic coating agent becomes large, also the malfunction such as the wide liquid pool may occur since the curing speed of the photochromic coating agent as a whole becomes slow.

Thus, in order to provide a sufficient irradiation amount of the light to the photochromic coating agent at the surface of the workpiece end part, a further study was carried out. As a result, when the reflecting plate is provided below the workpiece holding part which holds the workpiece during the photopolymerization to irradiate the light to the workpiece by reflecting the light which reached to the reflecting plate, the problem such that the shadow of the rotating shaft part holding the workpiece being printed to the coating layer at the center part of the workpiece occurred.

According to the above mentioned findings, by setting the reflectance provided at the lower part of the workpiece holding part within a predetermined range, the winkle and/or the liquid pool of the photochromic coating layer at the end part of the workpiece can be prevented, and also the shadow of the rotating shaft part which is holding the workpiece can be prevented from being printed to the photochromic coating layer, thereby the present invention was attained.

That is, the present invention which attains the above mentioned object comprises the following as a gist.
(1) A photopolymerization device comprising
   a workpiece holding part which holds a workpiece, and
   a photoirradiation device provided above the workpiece holding part to irradiate a light to the workpiece, wherein
   a reflecting plate having a specular gloss at angles of 60° of a reflecting surface of 10 to 200 is provided below the workpiece holding part so that the light reached to the reflecting surface of the reflecting plate is irradiated to the workpiece.
2) The photopolymerization device as set forth in (1), wherein the reflecting plate comprises the opening through hole parts, and a ratio of an area of the opening through hole parts with respect to the surface area of the reflecting surface of the reflecting plate is 1 to 70%.
(3) The photopolymerization device as set forth in (1) or (2) comprising
   a base formed with a shaft insertion hole,
   a workpiece holding rotating shaft part inserted into the shaft insertion hole, which enables a relative movement to an axial direction with respect to said base and capable of rotating around the axis, and comprising the workpiece holding part at an end part,
   a cover member formed with an opening part capable of being closed by said base, and forms a workpiece housing chamber which houses said workpiece holding part by contacting said base and a peripheral part of said opening part,
   the photoirradiation device irradiating the light against the workpiece on said workpiece holding part placed in said workpiece housing chamber,
   the reflecting plate provided between said workpiece holding part and the base and formed with the shaft insertion hole and having the specular gloss at angles of 60° of a reflecting surface of 10 to 200, and
   a control part which controls a relative movement of said base and said cover member, a relative movement in axial direction of said base and said workpiece rotating shaft part, a rotation of said workpiece rotating shaft part, and a photoirradiation of said photoirradiation device; and
   said photopolymerization device is constituted so that the light reached to the reflecting surface of the reflecting plate is irradiated to the workpiece.
(4) A method of producing a lens comprising a photochromic coating layer using the photopolymerization device as set forth in above mentioned (1) or (2), wherein said method comprises steps of
   holding a workpiece coated with a photopolymerizable coating agent including a photochromic compound to said workpiece holding part, and
   curing the coating agent by irradiating the light to said workpiece by said photoirradiating device.
(5) A method of producing a lens comprising a photochromic coating layer using the photopolymerization device shown in the above (3), wherein said method comprises steps of,
   holding a workpiece coated with a photopolymerizable coating agent including a photochromic compound to said workpiece holding part,
   forming a workpiece housing chamber for housing said workpiece by contacting said base with the peripheral part of the opening part of the cover member to close said opening part with the base,
   rotating said workpiece in said workpiece housing chamber, and
   curing the coating agent by irradiating the light to said workpiece by said photoirradiating device.
6) The method of producing the lens comprising the photochromic coating layer as set forth in the above mentioned (4) or (5), wherein a refractive index of the workpiece is 1.51 to 1.59.
(7) The method of producing the lens comprising the photochromic coating layer as set forth in any one of (4) to (6), wherein the workpiece is a plastic lens having a photoabsorption characteristic of a transmittance of 40% or less at a wavelength of 410 nm, the transmittance of 80% or less at the wavelength of 420 nm.
(8) A reflecting plate provided to a photopolymerization device, wherein a specular gloss at angles of 60° is 10 to 200.
(9) The reflecting plate as set forth in (8), wherein said photopolymerization device forms the photochromic coating on a surface of the plastic lens by photocuring.

### EFFECTS OF THE INVENTION

In the present invention, the photopolymerization device is constituted so that the reflecting plate having a specular gloss at angles of 60° of a reflecting surface of 10 to 200 is provided below the workpiece holding part to reflect the light which has reached to the reflecting plate thereby re-irradiating the workpiece. As a result, even when the difference of the refractive index between the photochromic coating layer and the workpiece is small, without lowering the photochromic characteristic, the winkle form malfunction and/or the wide liquid pool of the photochromic coating layer at the end part of the workpiece due to the insufficient polymerization can be prevented, and also the shadow of the rotating shaft part holding the workpiece can be prevented from being printed to the photochromic coating layer.

### BRIEF DESCRIPTION OF THE DRAWINGS

- **Fig.1**: is the schematic cross section of the photopolymerization device according to one embodiment of the present invention.

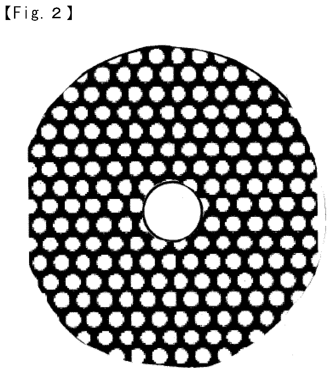

- **Fig.2**: is the schematic figure of the reflecting plate according to one embodiment of the present invention.

### BEST MODE TO CARRY OUT THE INVENTION

The photopolymerization device of the present invention comprises the workpiece holding part which holds the workpiece, and the photoirradiation device provided above the workpiece holding part to irradiate the light to the workpiece; wherein a reflecting plate having a specular gloss at angles of 60° of a reflecting surface of 10 to 200 is provided below the workpiece holding part so that the light reached to the reflecting surface of the reflecting plate is irradiated to the workpiece.

The reflecting plate irradiates the light to the workpiece by reflecting the light reached thereto, and the specular gloss at angles of 60° of the reflecting surface is 10 to 200. Here, as defined in JIS Z 8741, the specular gloss at angles of 60° digitize the degree of the specular gloss which is the property of the visual perception defined by the intensity of the specular reflectance light. The specular gloss at angles of 60° is a number shown as a relative value when 100 is the specular gloss of the glass surface having the reflectance of 1.567 wherein the specular reflectance is 10% when the visual light enters at angles of 60°.

Here, when the specular gloss at angles of 60° is less than 10, the winkle form malfunction and/or the wide liquid pool of the photochromic coating layer at the end part of the workpiece can not be prevented. On the other hand, in case the 60 degrees specular gloss exceeds 200, the winkle form malfunction and/or wide liquid pool of the photochromic coating layer at the workpiece end part can be prevented, however the light irradiated to the workpiece by the reflection becomes too much and the problem wherein the shadow of the rotating shaft part holding the workpiece being printed to the coating layer at the center part of the workpiece occurs. From the point of efficiently preventing the winkle form malfunction and/or wide liquid pool of the photochromic coating layer at the end part of the workpiece end part, preferably the specular gloss at angles of 60° of the reflecting surface is within the range of 10 to 150, and more preferably within the range of 10 to 100, further preferably within the range of 20 to 70.

The material and the shape of the above mentioned reflecting plate is not particularly limited as long as the specular gloss at angles of 60° of the reflecting surface is 10 to 200, and known reflecting plate can be employed. As the specific example of the material of the reflecting plate, metals such as aluminum, chromium, iron, cobalt, nickel, copper, silver, tin, platinum, and gold or so; alloys such as steel, stainless steel, chromium molybdenum steel, brass, magnesium alloy or so; anodic oxidation coating such as aluminum and titanium or so; further a tape using the aluminum foil which is made by rolling the aluminum or so may be mentioned.

As long as the specular gloss at angles of 60° of the reflecting surface is within the above mentioned range, it can be used as it is, however if the specular gloss at angles of 60° of the reflecting surface is not within the above mentioned range, the specular gloss at angles of 60° of the reflecting surface can be regulated by changing the surface roughness of the reflecting surface, or by carrying out the punching treatment which produces through holes to the reflecting plate so that the ratio of the area of the opening through hole parts in the surface area of the reflecting surface of the reflecting plate is 1 to 70%, preferably 5 to 60%, and more preferably 10 to 50%. Note that, in case the shaft insertion hole which will be discussed in below is formed to the reflecting plate 3, the shaft insertion hole is not included in said through hole. The number of the through holes and the position of through holes in the reflecting plate are not particularly limited, as long as the specular gloss at angles of 60° is within the above mentioned range, from the point of obtaining the uniform reflection light, preferably the through holes are provided by spacing out equally in the reflecting plate. From the point of obtaining uniform reflection light, the shape of the through hole is preferably round shape or hexagonal shape, and the size of the through hole is a diameter of 0.1 to 5.0 mm, more preferably 0.5 to 3.0 mm, and the pitch of 0.1 to 5.0 mm, and more preferably 0.5 to 3.0 mm.

As long as said reflecting plate is provided below the workpiece holding part, and capable of irradiating the light to the workpiece by reflecting the light reached thereto, the number of the reflecting plates and the position of reflecting plates in the photopolymerization device are not particularly limited, these can be determined accordingly depending of the shape and the size of the workpiece. However, as the constitution of the device can be simple, the reflecting plate is preferably provided on the inner wall which is formed with the workpiece housing chamber wherein the workpiece is housed and photopolymerization is carried out.

Hereinafter, the photopolymerization device and the production method of the lens comprising the photochromic layer according to the embodiment of the present invention will be described by referring to the figures; however the present invention is not to be limited thereto.

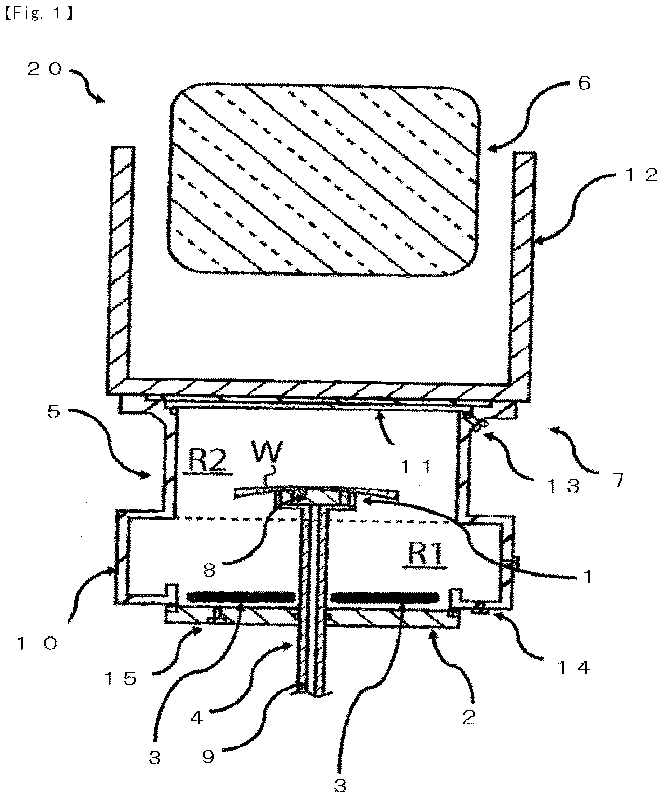

Fig.1 is the schematic cross section of the photopolymerization device 20 according to one embodiment of the present invention. The photopolymerization device 20 comprises, the workpiece holding part 1 which holds the workpiece, the base 2 formed with the shaft insertion hole, the reflecting plate 3 provided above the base 2 and formed with the shaft insertion hole, the workpiece holding rotating shaft part 4 inserted to the shaft insertion hole, the cover member 5 formed with the workpiece housing chamber R together with the base 2, the photoirradiation device 6 which irradiates the light against the workpiece W, the inert gas supplying means 7 which supplies the inert gas to the workpiece housing camber R, and the control part (not shown in the figure) which controls the movement of each parts.

The workpiece holding part 1 is the member holding the workpiece (the plastic lens), and is constituted by "U" shape member and/or plurality of pins provided along the same circumference. Note that, at inside of "U" shape member and/or plurality of pins provided along the same circumference, the suction pad 8 for holding the workpiece may be comprised. Plurality of fine holes are formed at the suction pad 8, and the suction force generated by the suction means not shown in the figures connected to the lower part of the workpiece holding rotating shaft part 4 is transmitted to the fine holes of the suction pad via the through hole 9 passing through inside of the workpiece holding rotating shaft part 4.

The base 2 is a flat plate shape formed with the shaft insertion hole at the center, and usually has a black color, and is positioned below the cover member 5. The base 2 is connected to the control part and the driving device not shown in the figure, and capable of making a relative movement in vertically direction against the cover member 5. The base 2 comprises the seal member which is not shown in the figure at the end part of the upper surface of the base; and when the workpiece housing chamber R is formed by covering the lower side opening part of the cover member 5 with the base 2, the seal member seals the workpiece housing chamber R by bonding at the outer side circumferential part of the lower side opening part.

As discussed in above, the material and the shape of the reflecting plate 3 is not particularly limited as long as the specular gloss at angles of 60° of the reflecting surface is within the range of 10 to 200.

The workpiece holding rotating shaft part 4 is inserted to said shaft insertion hole, and is connected with the control part and the driving device which is not shown in the figure. The workpiece holding rotating shaft part 4 is constituted so as to enable the relative movement in the axial direction against said base, and to enable to rotate around the axis, and can comprise the workpiece holding part at the end part. The through hole 9 is formed at the inside of the workpiece holding rotating part 4, and the workpiece holding rotating shaft 4 holds the workpiece W at the upper end part by suctioning the workpiece W to the upper surface of the suction pad 8 via the workpiece holding part 1.

The cover member 5 comprises the cover frame part 10 having the opening part in the vertical direction, and the transmitting plate 11 which covers the upper side opening part of the cover frame part 10.

The workpiece housing chamber R comprises the first area R1 positioned at the lower side, and the second area R2 positioned at the upper side and positioned closer to the photoirradiation device than the first area R1. At the point when the workpiece housing chamber R is formed by covering the lower opening part of the cover member 5 by base 2, the workpiece holding part 1 and the workpiece W are positioned at the first area R1. Then, the control part not shown in the figure drives the driving device not shown in the figure which is connected to the lower end part of the workpiece holding rotating shaft part 4; thereby raising the workpiece holding rotating shaft part 4, the workpiece holding part 1, and workpiece W against the base 2; thus the workpiece W moves to the second area R2 from the first area R1. In order to efficiently irradiate the light to the workpiece W from the photoirradiation device 6, the specular surface which reflects the light is formed at the inner circumference surface of the cover frame part 10 of the second area R2. Note that, the specular gloss at angles of 60° of said specular surface is about 500.

The photoirradiation device 6 comprises the light emitting part housed in the housing 12, and is placed above the cover member 5 and outside of the workpiece housing chamber R. The photoirradiation device 6 is controlled by the control part which is not shown in the figure. The light generated at the light emitting part of the photoirradiation device 6 transmit through the transmitting plate 11 of the cover member 5 and enters inside the workpiece housing R, thereby the light is irradiated to the workpiece W.

Note that, as the photoirradiation means of the photo irradiation device 6, the known irradiation means can be used. For example, known ultraviolet ray irradiation means of the lamp with electrode wherein the metal is sealed in the luminous tube and applying the energy from the outside in a steam form to discharge electricity such as a high-pressure mercury lamp, an ultra high-pressure mercury lamp, and metal halide lamp or so; the lamp with the electrode wherein the rare gas is sealed in the luminous tube and applying the energy from the outside to discharge electricity such as a xenon lamp and a deuterium lamp or so; and also an electrodeless lamp such as H bulb, H+ bulb, D bulb, V bulb or so which controls the energy of the microwaves can be used. Also, the light emitting diode (LED) capable of irradiating the ultraviolet ray by the solid light emission can be used as well. Among these, the light source having high output of the long wavelength ultraviolet ray having the wavelength of 315 to 450 nm is particularly preferably used.

The inert gas supplying means 7 is constituted from, the gas introduction port 13 which is formed above the cover frame part 10 and connected to the gas cylinder which is not shown in the figure, and the discharge ports 14 and 15 which is formed below the cover frame part 10 and also formed at the base 2. The opening and the closing of the gas introduction port 13 and the discharge ports 14 and 15 of the inactive gas supplying means are controlled by the control part which is not shown in the figure.

Hereinafter, the movement of the photopolymerization device 20 according to one embodiment of the present invention will be described based on Fig.1.

As the production method of the lens comprising the photochromic coating layer using the photopolymerization device 20, first the coating agent having the photochromic property is coated by dropping or so to the surface of the workpiece W such as the plastic lens or so having the main surface made of a flat surface or a curved surface of convex form. The shape of the cross section of the workpiece W is not particularly limited, and it may be a convex lens, a concave lens, a meniscus lens and a non-spherical surface lens or so. Also, the flat shape thereof is not particularly limited, however usually it is a lens of perfect circle shape which is prior to the lens shape processing. The thickness depends on the type of the lens, and also the diameter is not particularly limited, and usually it is 60 to 85 mm or so. Next, the workpiece W coated with the coating agent is mounted above the workpiece holding part 1 using the transferring means which is not shown in the figure. Here, the base 2 and the workpiece holding rotating shaft part 4 are placed below with respect to the cover member 10 by spacing apart. Also, the control part drives the suctioning means which is not shown in the figure and connected to the lower end part of the workpiece holding rotating shaft part 4, thereby the workpiece W is held by the suction force transmitted via the suction pad 8 while the surface coated with the coating agent is facing up. Also, the workpiece W may be coated with the coating agent while being held by the workpiece holding part 1.

Next, the seal member not shown in the figure of the base 2 is contacted with the outer side peripheral part of the lower side opening part of the cover member 10 by moving the base 2 upwards by driving the driving device not shown in the figure which drives the base 2. Thereby, the base 2 and the cover member 10 forms the workpiece housing chamber R which houses the workpiece holding part 1 and the workpiece W. Here, the workpiece holding rotating shaft part 4 inserted through the base 2 and the workpiece holding part 1 held thereto moves upwards together with the base 2, and the base 2 stops when it contacts with the cover member 10, then at this point, the workpiece W is positioned at the first area R1 of the workpiece housing chamber R.

Next, by driving the driving device which rotates the workpiece holding rotating shaft part 4, the workpiece W positioned at the first area R1 in the workpiece housing chamber R is rotated at the first rotating speed. Thereby, the coating agent coated on the upper surface of the workpiece W is spread by the centrifugal force, and at the same time, the excess coating agent will be removed from the surface of the workpiece W. The first rotating speed can be regulated appropriately depending on the coating agent and or the workpiece W; however it can be 300 to 1500 rpm or so.

Note that, the viscosity of the coating agent is not particularly limited, and preferably it is 50 to 500 mPa/sec at 23°C. This coating agent includes the photopolymerizable monomer, and the photochromic compound.

Next, by driving the driving device which allows the workpiece holding rotating shaft part 4 to make a relative movement with respect to the base 2, the workpiece holding rotating shaft part 4, the workpiece holding part 1 and the workpiece W held thereto are moved upwards while the base 2 is stopped. Thereby, the workpiece W is placed at the second area R2 of the workpiece housing chamber R.

In between the forming of the workpiece housing chamber R and the irradiation of the light by the photoirradiation device 6, the inert gas supplying means 7 is controlled and the inert gas (nitrogen) is filled in the workpiece housing chamber R. At the same time of introducing the inert gas into the workpiece housing chamber R by opening the gas introduction port 13, the discharge ports 14 and 15 are opened to discharge the air; thereby the inert gas is filled. From the point of shortening the time for the production, the filling of the inert gas is preferably carried out concurrently with the step of rotating the workpiece W at the first rotating speed, or with the step of relatively moving the workpiece holding rotating shaft part 4 with respect to the base 2. Note that, it is also possible to introduce the inert gas to the inside of the cover member 10 before forming the workpiece chamber R to carry out the preliminary substitution of the inert gas to the inside of the cover member 10.

Next, the light is irradiated to the workpiece W which is positioned at the second area R2 by controlling the photoirradiation device 6 while rotating at the second rotating speed, thereby curing the coating agent which is spread to the surface of the workpiece W. Thereby, the lens comprising the photochromic coating layer is produced. The second rotating speed is appropriately regulated depending on the coating agent or the workpiece W, however for example it is preferably 0 to 250 rpm; and in order to form even more uniform coating layer, it is preferably 20 to 200 rpm, and more preferably 50 to 150 rpm.

Note that, the effect of the present invention is exhibited when the plastic lens is the workpiece W having the refractive index of 1.51 to 1.59. Here, the refractive index refers to the refractive index with respect to the light having the wavelength of 589 nm at 20°C.

Further, the effect of the production method of the present invention is exhibited, when using the plastic lens wherein the photoabsorption characteristic of the workpiece W has the transmittance of 40% or less and preferably 30% or less at the wavelength of 410 nm, and transmittance of 80% or less and preferably 75% or less at the wavelength of 420 nm. Particularly, the photoabsorption characteristic of the workpiece W has a big influence on the liquid pool. The liquid pool is not a problem if it is 3 mm or less, however in case the liquid pool exceeds 3 mm, then it is not preferable from the point of appearance and the effective radius.

As an example of the above mentioned plastic lens, TRIVEX (registered trademark) (the refractive index of 1.53) which is a urethane based lens, an acrylic based lens (the refractive index of 1.55), and a polycarbonate lens (the refractive index of 1.59) or so may be mentioned.

Note that, depending on the intensity of the ultraviolet ray (UV intensity) of the wavelength of 365 nm at the surface of the workpiece, the preferable range of the specular gloss at angles of 60° of the reflecting plate differs. In general, when the UV intensity at the workpiece surface is strong, the shadow of the rotating shaft part which holds the workpiece is unlikely to be printed on the photochromic coating layer, and even when the reflecting plate having relatively high specular gloss at angles of 60° is used, a good photochromic coating layer can be formed. For example, when the UV intensity of the wavelength of 365 nm at the workpiece surface exceeds 200 mW/cm², the shadow of the rotating shaft part which holds the workpiece is unlikely to be printed on the photochromic coating layer, and the reflecting plate having the specular gloss at angles of 60° of 20 to 200 can be used. When the UV intensity at the wavelength of 365 nm at the workpiece surface exceeds 70 mW/cm² and less than 200 mW/cm², the shadow of the rotating shaft part which holds the workpiece is unlikely to be printed on the photochromic coating layer as well, and the reflecting plate having the specular gloss at angles of 60° of 20 to 150 can be used. When the UV intensity at the wavelength of 365 nm at the workpiece surface is less than 70 mW/cm², then the shadow of the rotating shaft part which holds the workpiece tends is relatively easily printed on the photochromic coating layer, and the reflecting plate having the specular gloss at angles of 60° of 20 to 70 can be used. Therefore, from the point of preventing the printing of the shadow of the rotating shaft part which holds the workpiece, high UV intensity is preferable. However, when strong UV light is irradiated, as mentioned in above, the photochromic property easily declines and the heat deformation of the workpiece easily occurs.

On the other hand, the distance between the workpiece and the reflecting plate can be set to an arbitrary value, however if it is too close the amount of light to the reflecting plate will decrease and a sufficient effect cannot be obtained, and if it is too far away, then the light returning from the reflecting plate will decrease, thus preferably it is 3 mm to 200 mm, more preferably 20 to 150 mm, and even more preferably 30 to 100 mm.

Therefore, when irradiating UV, the printing of the shadow of the rotating shaft part is taken into consideration, and the intensity of the UV light and the distance between the workpiece and the reflecting plate are preferably determined.

The above mentioned embodiment is the example of the embodiment of the present invention, and the present invention is not to be limited thereto, and obviously the different embodiment is present as well.

The inert gas used during the step of filling the inert gas is not limited to nitrogen and other inert gas such as argon or so can be used. The workpiece W used for the production may be so called semi-finished product wherein the backside process is carried out after forming the photochromic coating layer, or it may be finishing lens. The coating agent coated on the surface of the workpiece W is not particularly limited as long as it is the coating solution having the photopolymerization property including the photochromic compound. However, the coating agent disclosed for example in WO 2001/005854, WO 2003/011967, WO 2009/075388, WO 2011/125956, WO 2013/008825 or so can be used.

Note that, in the above mentioned coating solution, generally the photopolymerization initiator is added, as a preferable example, following can be mentioned as the examples.
Bezoin
Benzoinmethylether
Benzoinbutylether
Benzophenol
Acetophenone4,4'-dichlorobenzophenone
Diethoxyacetophenone
2-hydroxy-2-methyl-1-phenylpropane-1-one
Benzylmethylketal
1-(4-isopropylphenyl)-2-hydroxy-2-methylpropane-1-one
1-hydroxycyclohexylphenylketone
2-isopropylth ioxanthone
Bis(2,6-dimethoxybenzoyl-2,4,4-trimethyl-pentylphosphineoxide)
Bis(2,4,6-trimethylbenzoyl)-phenylphosphineoxide
2,4,6-trimethylbenzoyldiphenyl-phosphineoxide
2-benzyl-2-dimethylamino-1-(4-morpholinophenyl)-butanone-1

The above mentioned photopolymerization initiator can be used alone, or by mixing two or more thereof.

The photochromic lens obtained by the present invention suppress the winkle form malfunction and/or the wide liquid pool formed at the end surface of the workpiece due to the polymerization malfunction to be generated without lowering the characteristic of the photochromic coating layer. Also, the photochromic lens obtained by the present invention prevents the shadow of the rotating shaft part of the photopolymerization device being from printed on the photochromic coating layer, and obtains high yield, further has excellent appearance.

The photochromic lens is obtained as a same shape as the plastic lens used as the workpiece W, and usually the flat shape is a perfect circle. The photochromic lens may be used as it is shaped, however if needed, it may be cut in accordance with the shape of the glass frame. For the photochromic lens of the present invention, the winkle and the liquid pool are not formed at the end part of the photochromic coating layer, hence there is no need to cut the end part excessively. Therefore, only little cutting stock is needed, hence the lens having small diameter can be used as the plastic lens which is the source material, thus the cost for the source material can be reduced. Also, because the cutting amount can be little, the lens shape processing can be completed in short period of time, thus the cost for the production can be reduced.

### EXAMPLE

Next, the present invention will be described in details using the examples and the comparative examples; however the present invention is not to be limited to the examples.

### Example 1

The photopolymerization device constituted as shown in Fig.1 was used, and the photochromic coating layer was formed to the surface of the plastic lens. On the base of the photopolymerization device, the reflecting plate (the specular gloss at angles of 60° of 30, and the porosity of 22.7%) made of the white alumite (the anodic oxidation coated aluminum) formed with the round hole having the diameter of 1.0 mm in a pitch of 2 mm was provided. Note that, the specular gloss at angles of 60° is the average value measured by placing Handy type Gloss Meter PG-1 M (made by NIPPON DENSHOKU INDUSTRIES Co.,LTD) using n = 5.

Also, as the workpiece (the plastic lens), the perfect circle shape polycarbonate lens having the diameter of 75 mm and the thickness of 10 mm was used.

As the photochromic coating solution,
100 parts by weight of polymerizable monomer consisting of 5 parts by weight of γ-methacryloyloxypropyltrimethoxy silane, 20 parts by weight of trimethylolpropanetrimethacrylate, 35 parts by weight of 2,2-bis(4-methacryloyloxyethoxyphenyl)propane, 10 parts by weight of urethane oligomer hexaacrylate, 20 parts by weight of polyethyleneglycol diacrylate having an average molecular weight of 532 and 10 parts by weight of glycidylmethacrylate was added with,
3 parts by weight of chromene 1 shown in below formula,
   5 parts by weight of bis(1, 2, 2, 6, 6-pentamethyl-4-piperidyl)sebacate as the stabilizer, 0.3 parts by weight of CGI148 (1-hydroxycyclohexylphenylketone) and 0.3 parts by weight of CGI819 (bis(2, 4, 6-trimethylbenzoyl)-phenylphosphineoxide) as the polymerization initiator, and thoroughly stirred, then air vacuumed thereby the coating solution was obtained and used. The viscosity of the coating solution at 23°C was 160 mPa/sec.

The above mentioned workpiece was suctioned to the workpiece holding part of the photopolymerization device shown in Fig.1, and said reflecting plate was provided above the base made of black alumite at 60 mm lower side from the workpiece lower face. Said photochromic coating solution was dropped to the workpiece, and the workpiece holding rotating shaft was rotated using a spin coat (the rotational speed: 900 rpm) so that the thickness of the photochromic coat was 40 micron. Next, the workpiece holding rotating shaft part was driven to move upwards, and the rotational speed of the workpiece holding rotating shaft was set to (200) rpm, then the UV light generated by the electrodeless lamp (D bulb) was irradiated to the workpiece for 80 seconds from the height of 200 mm above the workpiece in the nitrogen gas atmosphere. Here, the UV intensity at 365 nm was 125 mW/cm² at the workpiece surface, and the integrated amount of light was 12J.

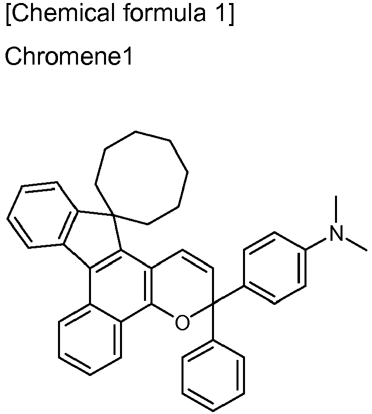

For the obtained photochromic coating lens, the below evaluation for the appearance was carried out.

### (i) Winkle

The degree of the winkles formed at the end part of the workpiece was evaluated by visual observation, and it was evaluated in 6 grades from 0: no winkle to 5: prominent winkle formed (0 ~ 2 were evaluated as pass).

### (ii) Liquid pool

The degree of the liquid pool generated at the end part of the workpiece was evaluated based on the distance (mm) from the outer peripheral of the workpiece towards the center. The larger the number (mm) is, the larger the degree of the malfunction is, and 0 to 2 mm was considered pass, and any value larger than that was considered fail.

### (iii) Printing of the shadow of the workpiece holding rotating shaft part to the workpiece

The shadow of the workpiece holding rotating shaft formed at the center part of the workpiece was projected on the white paper by irradiating a light using the high pressure mercury pressure lamp (BULBTRONICS) from about 50 cm above the workpiece, thereby the degree of the printing was evaluated based on the difference of contrast in 6 grades which were 0: no printing to 5: prominent printing (0 to 2 were considered pass).

The obtained photochromic coating lens did not have winkle form malfunction of the photochromic coating layer at the end part of the workpiece, and did not have wide liquid pool, further did not have the printing of the shadow of the workpiece holding rotating shaft part to the photochromic coating layer, thus had good quality.

### Examples 2 to 11

The photochromic coating lens was produced, and evaluated the appearance as same as in the example 1, except that the type of the workpiece, the type of UV lamp, the UV intensity of 365 nm at the workpiece surface, the material of the reflecting plate and the specular gloss at angles of 60° of the reflecting plate were variously changed. The results are shown in Table 1.

### Example 12

Using the spin coater (1 H-DX2 made by MIKASA), aqueous dispersion urethane emulsion (product name: NJ-321A made by TOKUYAMA Corporation) was coated on the workpiece (the center thickness of 5 mm, the base curve 5.00, urethane based lens TRIVEX of φ 75 mm) so that the thickness was about 4 µm, thereby the primer layer was formed. Here, the photoabsorption characteristic of the used workpiece had the transmittance at the wavelength 410 nm of about 18%, and the transmittance at the wavelength 420 nm of about 68%. Next, on the base made of the black alumite which was 60 mm below the workpiece stacked with said primer layer, the reflecting plate made of the white alumite (the specular gloss at angles of 60° of 30, and the porosity of 22.7%) formed with the round hole having the diameter of 1.0 mm in a pitch of 2 mm was provided. Then, the photochromic coating solution same as the example 1 was coated on the workpiece by the spin coat method, and then the UV light was irradiated for 80 seconds from the position 200 mm above the workpiece.

The obtained photochromic coating lens did not have the winkle form malfunction of the photochromic coating layer at the end part of the workpiece, did not have the printing of the shadow of the workpiece holding rotating shaft part to the photochromic coating layer, further the liquid pool was 2 mm or so, hence showed good quality.

### Comparative example 1

On the base (the specular gloss at angles of 60° of 5) made of black alumite in the example 1, the photochromic coating solution was coated on the workpiece without providing the reflecting plate using the spin coat, and then the UV light was irradiated for 80 seconds from the position 200 mm above the workpiece.

The obtained photochromic coating lens did have the winkle form malfunction of the photochromic coating layer at the end part of the workpiece.

### Comparative example 2

On the base made of the black alumite in the example 1, the reflecting plate (the specular gloss at angles of 60° of 250) made of SUS304 carried out with the buff polishing treatment was provided, then the photochromic coating solution was coated on the workpiece using the spin coat, and then the UV light was irradiated for 80 seconds from the position 200 mm above the workpiece.

The obtained photochromic coating lens did have the printing of the shadow of the workpiece holding rotating shaft part to the photochromic coating layer.

### Comparative example 3

On the base (the specular gloss at angles of 60° of 5) made of black alumite in the example 12, the photochromic coating solution was coated on the workpiece without providing the reflecting plate by the spin coat method, and then the UV light was irradiated for 80 seconds from the position 200 mm above the workpiece.

The obtained photochromic coating lens did not have the printing of the shadow of the workpiece holding rotating shaft part to the photochromic coating layer, however had significant winkle form malfunction of the photochromic coating layer at the end part of the workpiece, and also a wide liquid pool of 4 mm or so was formed.

The above results are shown in Table 1:

| Example | Workpiece | UV lamp | Light at surface of | | Reflecting plate | | Appearance Evaluation | | |
|---|---|---|---|---|---|---|---|---|---|
| | | | UV intensity at 365 nm (mW/cm2) | Cumulative light amount (J/cm2) | Material | Specular gloss at angles of 60° | Winkle | Liquid pool (mm ) | Printing of workpiece holding rotating shaft part on the workpiece |
| 1 | polycarbonate | D bulb | 100 | 10 | White alumite (diameter of 1.0 mm round hole, pitch of 2 mm, porosity of 22.7%) | 30 | 0 | 1 | 0 |
| 2 | polycarbonate | D bulb | 100 | 10 | White alumite (diameter of 1.0 mm round hole, pitch of 1.5 mm, porosity of 18%) | 60 | 0 | 1 | 0 |
| 3 | polycarbonate | D bulb | 100 | 10 | White alumite (diameter of 0.5 mm round hole, pitch of 1 mm, porosity of 15%) | 90 | 0 | 1 | 0 |
| 4 | polycarbonate | D bulb | 100 | 10 | Aluminum (porosity of 0%) | 120 | 0 | 1 | 1 |
| 5 | polycarbonate | D bulb | 100 | 10 | White alumite (diameter of 3.0 mm round hole, pitch of 4 mm, porosity of 51%) | 10 | 2 | 1 | 0 |
| 6 | acrylic lens (refractive index of 1.55) | D bulb | 100 | 10 | SUS304 (porosity 0%) | 90 | 0 | 1 | 0 |
| 7 | polycarbonate | D bulb | 250 | 10 | Aluminum (porosity 0%) | 120 | 0 | 1 | 0 |
| 8 | polycarbonate | D bulb | 50 | 10 | White alumite (diameter of 1.0 mm round hole, pitch of 2 mm, porosity of 22.7%) | 30 | 1 | 2 | 1 |
| 9 | polycarbonate | H bulb | 100 | 10 | White alumite (diameter of 1.0 mm round hole, pitch of 1.5 mm, porosity of 18%) | 60 | 0 | 1 | 0 |
| 10 | polycarbonate | metal halide lamp | 100 | 10 | White alumite (diameter of 1.0 mm round hole, pitch of 1.5 mm, porosity of 18%) | 60 | 0 | 1 | 0 |
| 11 | polycarbonate | LED lamp | 100 | 10 | White alumite (diameter of 1.0 mm round hole, pitch of 1.5 mm, porosity of 18%) | 60 | 0 | 1 | 0 |
| 12 | TRIVEX | D bulb | 100 | 10 | White alumite (diameter of 1.0 mm round hole, pitch of 1.5 mm, porosity of 18%) | 30 | 0 | 2 | 0 |
| | | | | | | | | | |

| Comparative example | Workpiece | UV lamp | Light at surface of | | Reflecting plate | | Appearance Evaluation | | |
|---|---|---|---|---|---|---|---|---|---|
| | | | UV intensity at 365 nm (mW/cm2) | Cumulative light amount (J/cm2) | Material | Specular gloss at angles of 60° | Winkle | Liquid pool (mm ) | Printing of workpiece holding rotating shaft part on the workpiece |
| 1 | polycarbonate | D bulb | 100 | 10 | NONE | - | 5 | 3 | 0 |
| 2 | polycarbonate | D bulb | 100 | 10 | SUS304 buff polished (porosity of 0%) | 250 | 0 | 1 | 5 |
| 3 | TRIVEX | D bulb | 100 | 10 | NONE | - | 4 | 4 | 0 |

### NUMERICAL REFERENCES

- 1: Workpiece holding part
- 2: Base
- 3: Reflecting plate
- 4: Workpiece holding rotating shaft part
- 5: Cover member
- 6: Photoirradiation device
- 7: Inert gas supplying means
- 8: Suction pad
- 9: Through hole
- 10: Cover frame
- 11: Transmitting plate
- 12: Housing
- 13: Gas introduction port
- 14, 15: Gas discharge port
- 20: Photopolymerization device

- W: Workpiece
- R: Workpiece housing chamber
- R1: First area
- R2: Second area

## Claims

1. A photopolymerization device comprising
a workpiece holding part which holds a workpiece, and
a photoirradiation device provided above of the workpiece holding part to irradiate a light to the workpiece, wherein
a reflecting plate having a specular gloss at angles of 60° of a reflecting surface of 10 to 200 is provided below of the workpiece holding part so that the light reached to the reflecting surface of the reflecting plate is irradiated to the workpiece.

2. The photopolymerization device as set forth in claim 1, wherein the reflecting plate comprises the opening through hole parts, and a ratio of an area of the opening through hole parts with respect to the surface area of the reflecting surface of the reflecting plate is 1 to 70%.

3. The photopolymerization device as set forth in claim 1 or 2 comprising a base formed with a shaft insertion hole,
a workpiece holding rotating shaft part inserted into the shaft insertion hole, which enables a relative movement to an axial direction with respect to said base and capable of rotating around the axis, and comprising the workpiece holding part at an end part,
a cover member formed with an opening part capable of being closed by said base, and forms a workpiece housing chamber which houses said workpiece holding part by contacting said base and a peripheral part of said opening part,
the photoirradiation device irradiating the light against the workpiece on said workpiece holding part placed in said workpiece housing chamber,
the reflecting plate provided between said workpiece holding part and the base and formed with the shaft insertion hole and having the 60 degrees specular gloss of a reflecting surface of 10 to 200, and
a control part which controls a relative movement of said base and said cover member, a relative movement in axial direction of said base and said workpiece rotating shaft part, a rotation of said workpiece rotating shaft part, and a photoirradiation of said photoirradiation device; and
said photopolymerization device is constituted so that the light reached to the reflecting surface of the reflecting plate is irradiated to the workpiece.

4. A method of producing a lens comprising a photochromic coating layer using the photopolymerization device as set forth in claim 1 or 2,
wherein said method comprises steps of
holding a workpiece coated with a photopolymerizable coating agent including a photochromic compound to said workpiece holding part, and
curing the coating agent by irradiating the light to said workpiece by said photoirradiating device.

5. A method of producing a lens comprising a photochromic coating layer using the photopolymerization device shown in claim 3, wherein said method comprises steps of,
holding a workpiece coated with a photopolymerizable coating agent including a photochromic compound to said workpiece holding part,
forming a workpiece housing chamber for housing said workpiece by contacting said base with the peripheral part of the opening part of the cover member to close said opening part with the base,
rotating said workpiece in said workpiece housing chamber, and
curing the coating agent by irradiating the light to said workpiece by said photoirradiating device.

6. The method of producing the lens comprising the photochromic coating layer as set forth in claim 4 or 5, wherein a refractive index of the workpiece is 1.51 to 1.59.

7. The method of producing the lens comprising the photochromic coating layer as set forth in any one of claims 4 to 6, wherein the workpiece is a plastic lens having a photoabsorption characteristic of a transmittance of 40% or less at a wavelength of 410 nm, the transmittance of 80% or less at the wavelength of 420 nm.

8. A reflecting plate provided to a photopolymerization device, wherein a specular gloss at angles of 60° is 10 to 200.

9. The reflecting plate as set forth in claim 8, wherein said photopolymerization device forms the photochromic coating on a surface of the plastic lens by photocuring.
